# FASCICULE DE BREVET EUROPEEN

(11) **EP 2 845 707 B1**
(45) Date de publication et mention de la délivrance du brevet: **28.06.2017**
(21) Numéro de dépôt: 13183410.3
(22) Date de dépôt: 06.09.2013
(51) Int. Cl.: B29C 33/14, B29C 45/14, B29C 70/78

(54) **Maintien provisoire de tôle sur moule d'injection par soudure**
Provisorische Befestigung eines Blechs auf einer Spritz-Form durch Verschweißungen
Provisional maintaining of a blank on an injection mould by welds

(43) Date de publication de la demande: 11.03.2015
(73) Titulaire: Safran Aero Boosters SA, 4041 Herstal (BE)
(72) Inventeur: Hannecart, Benoît, 4650 Herve (BE)
(74) Mandataire: Lecomte & Partners

(56) Documents cités:
- EP-A1- 0 936 045
- DE-B3-102008 031 814

## Description

### Domaine technique

L'invention a trait à un procédé de moulage par injection de résine. Plus particulièrement, l'invention a trait à un procédé de moulage d'une pièce composite avec une tôle formant une surface de la pièce composite qui est moulée par injection de résine. L'invention a également trait à un carter composite de compresseur de turbomachine moulé selon l'invention.

### Technique antérieure

Une turbomachine axiale, notamment d'aéronef, doit être allégée. Pour atteindre cet objectif, il est nécessaire de réduire la masse de ses carters. L'allégement est possible en employant des matériaux composites pour réaliser, par exemple, un carter externe de compresseur. Or, un tel carter externe peut présenter un insert métallique, par exemple une tôle qui sert de surface d'accrochage à une couche annulaire de matériau abradable. Cet ajout est bénéfique puisque l'adhérence d'une couche d'abradable est meilleure sur métal que sur un matériau composite.

Il est connu du document EP 2 418 387 A1 un carter de compresseur de turbomachine axiale. Le carter comprend une paroi composite avec un feuillard métallique plaqué sur la surface intérieure du carter. La paroi composite est réalisée à partir d'une préforme disposée dans un moule où elle reçoit une résine injectée selon un procédé RTM. Le feuillard est fixé à la paroi composite après moulage, à l'aide de colle. Ce mode de réalisation d'un carter de compresseur permet de lier un carter composite et un feuillard métallique. Or, le positionnement du feuillard dans le carter est compliqué en raison de la forme incurvée du carter. Il est aussi connu du document EP 0 936 045 A1 d'utiliser des moyens de fixations dans un moule pour positionner une grille métallique flexible à la surface d'un boîtier.

Pour simplifier la mise en oeuvre de la tôle, il est connu de l'homme du métier de positionner la tôle contre une surface de moulage puis de disposer par-dessus la préforme de la pièce composite. La tôle est ainsi maintenue par la préforme qui est elle-même bloquée en position par le moule lors de sa fermeture. Cependant, la pression de la résine injectée peut déformer et déplacer la préforme. Par conséquent, la tôle se déplace sensiblement en n'occupe plus sa place prédéfinie.

### Résumé de l'invention

### Problème technique

L'invention a pour objectif de résoudre au moins un des problèmes soulevés par l'art antérieur. Plus particulièrement, l'invention a pour objectif d'améliorer le maintien d'une tôle dans un moule d'injection.

### Solution technique

L'invention a trait à un procédé de fabrication selon la revendication 1 d'une pièce composite.

Selon un mode avantageux de l'invention, les moyens de fixation comprennent en outre un ou plusieurs des moyens suivants :
microsoudure, soudure par résistance électrique, brasure, collage, agrafage, vissage.

Selon un mode avantageux de l'invention, les moyens de fixation sont configurés pour libérer la tôle, préférentiellement par rupture desdits moyens, lorsqu'un effort compris entre 100 N et 10000 N par m2 de tôle est appliqué à la tôle dans la direction de démoulage.

Selon un mode avantageux de l'invention, les moyens de fixation sont configurés de sorte à ce que la fixation de la tôle à la surface du moule est moins forte qu'avec le corps après solidification de la résine.

Selon un mode avantageux de l'invention, la tôle de l'étape (a) est initialement généralement plane et flexible et est cintrée sur la surface du moule incurvée et/ou bombée.

Selon un mode avantageux de l'invention, avant l'étape (b), le procédé comprend une étape (b-3) préalable à l'étape (b), de mise en place d'une préforme fibreuse dans le moule qui recouvre la tôle, préférentiellement la préforme s'étend dans la majorité du volume du corps de la pièce composite.

Selon un mode avantageux de l'invention, le procédé comprend une étape (b-1) entre l'étape (b-3) et l'étape (b), durant laquelle la préforme presse la tôle contre la surface du moule, éventuellement la préforme (48) déforme la tôle et la plaque d'avantage contre la surface du moule.

Selon un mode avantageux de l'invention, la préforme fibreuse comprend un empilement de plis fibreux, préférentiellement les plis sont tissés.

Selon un mode avantageux de l'invention, la préforme fibreuse comprend des fibres de carbone et/ou des fibres de verre, préférentiellement la préforme est pré imprégnée d'une résine.

Selon un mode avantageux de l'invention, la tôle comprend une forme de bande avec un axe d'allongement principal, les moyens de fixation étant répartis parallèlement à l'allongement principal.

Selon un mode avantageux de l'invention, chacun des moyens de fixation comprend un diamètre général compris entre 0,001 mm et 20,00 mm, préférentiellement compris entre 0,005 mm et à 2,00 mm, plus préférentiellement compris entre 0,010 mm et 0,05 mm.

Selon un mode avantageux de l'invention, la pièce composite est un carter annulaire externe, notamment de compresseur axial, avec une surface annulaire interne, la tôle étant une tôle annulaire plaquée contre la surface annulaire interne, éventuellement la tôle est mise en forme de sorte à l'arquer.

Selon un mode avantageux de l'invention, la surface annulaire interne présente une variation de rayon, la tôle comprend une pluralité de perforations ou de découpes réparties sur sa surface de sorte à augmenter sa capacité à épouser la surface interne.

Selon un mode avantageux de l'invention, le carter annulaire est réalisé par demi-carters annulaires séparés par un plan s'étendant axialement, éventuellement ledit plan sépare également la tôle, préférentiellement les demi-carters comprennent des brides annulaires et des brides axiales qui s'étendent radialement.

Selon un mode avantageux de l'invention, la tôle est recouverte d'une couche de matériau abradable destinée à coopérer par abrasion avec des extrémités d'aubes rotoriques de sorte à assurer une étanchéité.

La tôle est métallique, éventuellement la tôle comprend de l'acier, de l'aluminium, du titane, du cuivre, un alliage d'au moins un de ces matériaux.

Selon un mode avantageux de l'invention, la tôle est un feuillard métallique ou un ruban métallique.

Selon un mode avantageux de l'invention, les moyens de fixation forment au moins une zone de fixation, préférentiellement plusieurs zones de fixation distantes les unes des autres.

Selon un mode avantageux de l'invention, les zones de fixation comprennent au moins un, préférentiellement plusieurs points de fixation.

Selon un mode avantageux de l'invention, chaque zone de fixation et/ou chaque point de fixation a une résistance à la traction et/ou au cisaillement inférieur(e) à 500 N, préférentiellement inférieur(e) à 10 N, plus préférentiellement inférieur(e) à 0,1 N.

Selon un mode avantageux de l'invention, chaque zone de fixation a une résilience inférieure à 1000 J, préférentiellement inférieure à 100 J, plus préférentiellement inférieure à 10 J, éventuellement inférieure à 1 J.

Selon un mode avantageux de l'invention, la tôle est annulaire et présente axialement une variation de diamètre supérieure à 1%, préférentiellement supérieure à 3%.

Selon un mode avantageux de l'invention, le moule est essentiellement rigide.

Selon un mode avantageux de l'invention, la tôle a une épaisseur inférieure à 2,00 mm, préférentiellement inférieure à 0,50 mm, plus préférentiellement inférieure à 0,10 mm.

Selon un mode avantageux de l'invention, lors de l'étape (b), l'injection s'effectue à une pression comprise entre 1 bar et 15 bars.

Selon un mode avantageux de l'invention, le moule est apte à être ouvert et fermé

Selon un mode avantageux de l'invention, la préforme est comprimée lors de la fermeture du moule.

Selon un mode avantageux de l'invention, lorsque la tôle est plaquée contre la surface de moulage métallique durant l'étape (b-1), elle est préférentiellement déformée élastiquement, plus préférentiellement majoritairement élastiquement, et éventuellement plastiquement.

### Avantages apportés

L'invention permet de simplifier le maintien de la tôle dans le moule. La réalisation de quelques points de soudures peut suffire, ce qui ne nécessite qu'une dépense réduite. Par ailleurs, le procédé permet de conserver un positionnement précis de la tôle par rapport à la pièce composite.

### Brève description des dessins

La figure 1 représente une turbomachine axiale selon l'invention.
La figure 2 est un schéma d'un compresseur de turbomachine selon l'invention.
La figure 3 est un diagramme illustrant le procédé de moulage selon l'invention.
La figure 4 représente l'étape de mise en place d'une tôle contre une surface de moulage selon l'invention.
La figure 5 représente l'étape de fixation de la tôle sur la surface du moule selon l'invention.
La figure 6 est une coupe selon l'axe 6-6 tracé sur la figure 5 et représente l'étape de mise en place d'une préforme fibreuse contre la surface de moulage selon l'invention.
La figure 7 représente l'étape de fermeture partielle du moule selon l'invention.
La figure 8 illustre une coupe suivant l'axe 8-8 de la figure 7.
La figure 9 illustre l'étape d'application d'une pression sur la tôle par la préforme selon l'invention.
La figure 10 symbolise l'étape d'injection et polymérisation d'une résine dans le moule selon l'invention.
La figure 11 représente l'étape de libération de la tôle selon l'invention.
La figure 12 schématise l'étape d'extraction de la pièce composite du moule selon l'invention.

### Description des modes de réalisation

Dans la description qui va suivre, les termes intérieur ou interne et extérieur ou externe renvoient à un positionnement par rapport à l'axe de rotation d'une turbomachine axiale.

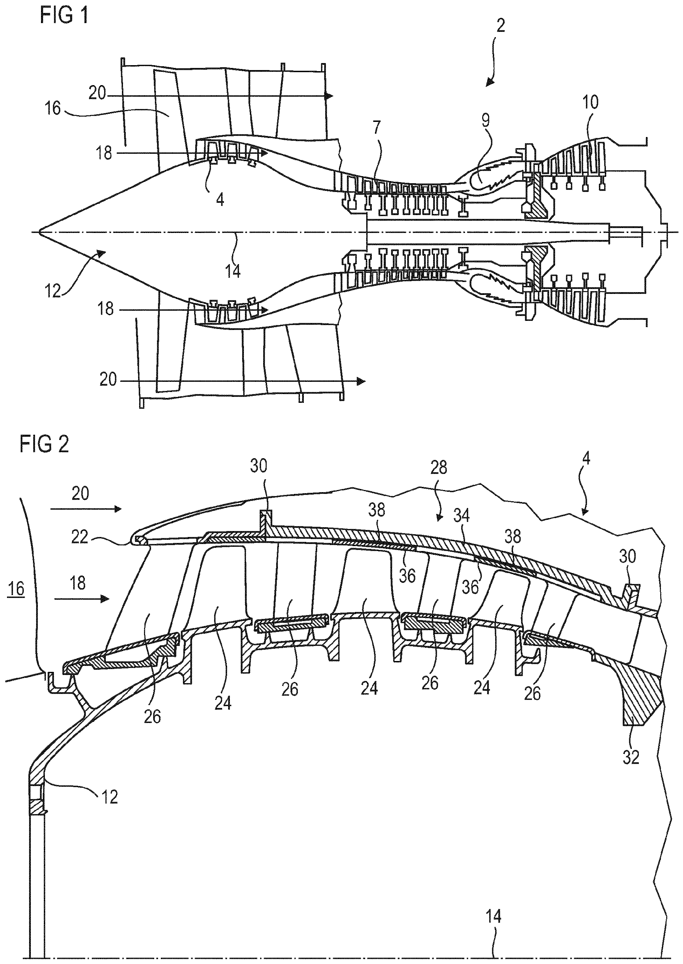

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 7, une chambre de combustion 9 et un ou plusieurs niveaux de turbines 10. En fonctionnement, la puissance mécanique de la turbine 10 transmise via l'arbre central jusqu'au rotor 12 met en mouvement les deux compresseurs 4 et 7. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16, ou à une rangée d'aubes rotoriques pour redresser le flux d'air, de sorte à convertir la vitesse du flux en pression.

Le compresseur comprend au moins une pièce composite 28 tel un carter externe 28. La pièce composite 28 peut comprendre des brides annulaires 30 pour la fixation du bec de séparation 22 et/ou pour se fixer à un carter intermédiaire 32 de la turbomachine. Les brides annulaires 30 peuvent comprendre des orifices de fixation (non représentés) pour permettre une fixation par boulons, ou par lockbolts. La pièce composite 28 présente une forme annulaire, avec un profil de révolution autour de l'axe de rotation 14 de la turbomachine.

La pièce composite 28 comprend un corps qui peut éventuellement avoir une forme de paroi annulaire 34. La paroi annulaire 34 présente une forme d'ogive, avec une variation de son rayon le long de l'axe 14. Cette évolution du rayon peut s'inverser. La paroi annulaire 34 présente une surface intérieure avec une double courbure, l'une des courbures étant selon un plan axial, l'autre courbure selon un plan radial. Il est entendu que le plan radial est perpendiculaire à l'axe 14, le plan axial s'étend axialement et radialement.

La paroi annulaire 34 peut présenter des séries d'orifices de fixation (non représentés) pour la fixation des aubes statoriques 26. Les orifices de fixation peuvent être munis d'inserts (non représentés) pour renforcer le matériau composite de la pièce composite 28. Ces inserts peuvent être intégrés dans l'épaisseur de la paroi annulaire 34 ou des brides 30.

La pièce composite 28 peut également être un support pour des couches annulaires de matériau abradable 36 qui sont disposées contre la paroi annulaire 34 et qui sont destinées à assurer une étanchéité avec les extrémités externes des aubes rotoriques 24. La pièce composite 28 peut comprendre un matériau composite, par exemple avec une matrice organique et des fibres de carbone.

Pour améliorer l'accroche des couches d'abradable 36, la pièce composite 28 comprend au moins un, préférentiellement plusieurs feuillards 38 également appelés tôles 38, ou encore rubans 38, métalliques, qui sont intercalés entre chaque couche d'abradable 36 et la pièce composite 28. Elles présentent des formes annulaires. Les tôles 38 peuvent s'étendre axialement sur la majorité des couches d'abradable 36.

La pièce composite 28 peut être une demi-coquille de carter externe. Elle peut former une portion de carter externe, divisé selon un plan qui s'étend suivant l'axe 14. Pour joindre les demi-coquilles, celles-ci sont munies de brides axiales destinées à être fixées l'une à l'autre.

Selon la portée de l'invention, la paroi annulaire est un aspect optionnel. Une tôle peut être appliquée à tout corps de pièce composite, par exemple d'un corps formant un bloc de matière quelconque.

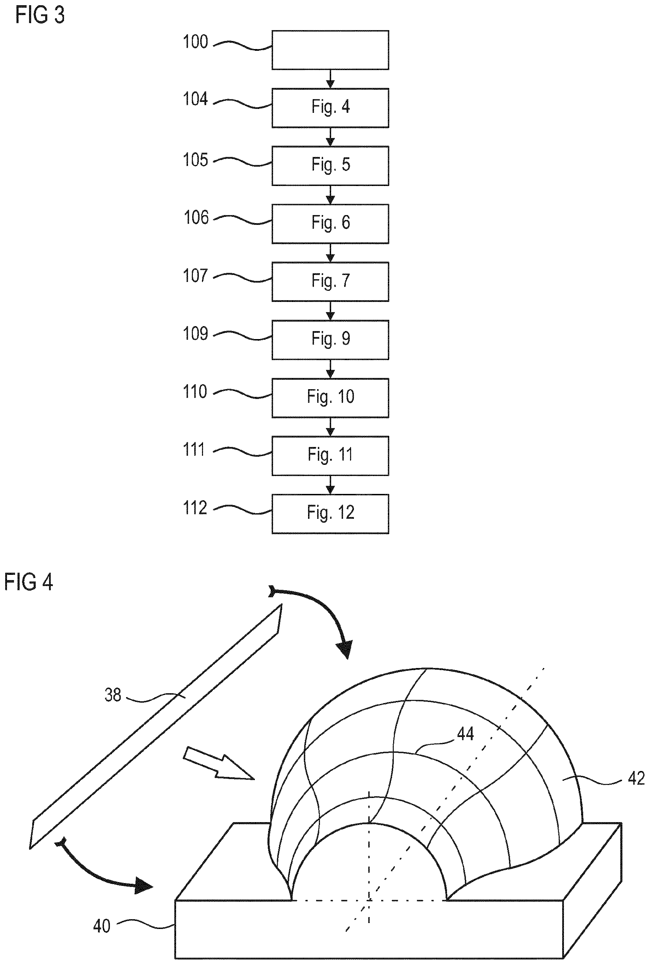

La figure 3 représente un diagramme du procédé de fabrication de la pièce composite qui comprend un corps en résine et une tôle formant une surface de ladite pièce. La pièce composite peut être fabriquée selon un procédé RTM (en anglais Resin Transfert Molding), permettant un transfert d'une résine dans un moule renfermant une préforme.

Le procédé peut comprendre la succession, éventuellement dans cet ordre, des étapes suivantes:
(a-1) fourniture ou fabrication 100 d'une tôle ;
(a) mise en place 104 au moins partielle de la tôle contre une surface du moule ;
(a+1) fixation 105 de la tôle sur la surface du moule à l'aide de moyens de fixation ;
(b-3) mise en place 106 d'une préforme dans le moule et contre la tôle;
(b-2) fermeture partielle 107 du moule ;
(b-1) application d'une pression sur la tôle par la préforme 109 lors de la fermeture complète du moule ;
(b) injection et solidification 110 d'une résine ;
(c1) libération de la tôle 111 des moyens de fixation;
(c2) extraction 112 de la pièce composite du moule.

La tôle fournie ou fabriquée lors de l'étape (a-1) est essentiellement plane. Les dimensions de la tôle peuvent sensiblement correspondre à la forme développée qu'occupe la tôle lorsque cette dernière est intégrée dans la pièce composite. La tôle est essentiellement fine. Son épaisseur est inférieure à 2,00 mm, préférentiellement inférieure à 0,20 mm. Elle est essentiellement flexible. Par flexible, on entend que la tôle peut s'arquer de sorte à former au moins un dixième de cercle, préférentiellement un demi-cercle, tout en se déformant élastiquement. Elle est configurée pour pouvoir être arquée, par exemple en formant un demi-cercle, et épouser la surface interne de la paroi annulaire en se déformant élastiquement. L'étape (a-1) peut être une sous étape de l'étape (a).

La tôle est essentiellement allongée et forme une bande, sa longueur est au moins trois fois supérieure, préférentiellement au moins dix fois supérieure à sa largeur. Elle présente des bords longitudinaux opposés, s'étendant suivant son allongement principal. La tôle peut comprendre des découpes pour augmenter sa capacité à se déformer et à épouser la surface de moulage métallique.

L'étape (b-3) mise en place 106 de la préforme dans le moule peut être une étape de fourniture ou fabrication, et mise en place 106 de la préforme. La préforme peut être produite simultanément à sa mise en place.

Les étapes (c1) et (c2) peuvent être des sous-étapes d'une étape (c) démoulage de la pièce composite, qui est éventuellement une étape globale.

La figure 4 illustre l'étape de (a) mise en place de la tôle contre une surface 42 du moule.

Le moule comprend plusieurs portions de moulage dont au moins une première portion de moulage 40. Les portions de moulage sont mobiles l'une par rapport à l'autre. La tôle 38 est positionnée contre la première portion de moulage 40. La première portion de moulage 40 présente une surface 42 ou surface de moulage 42 qui forme au moins une portion complémentaire de la surface interne de la paroi annulaire. La surface 42 est incurvée et/ou bombée. Elle reproduit généralement les courbures selon les plans axiaux et radiaux de la paroi annulaire, ainsi que les évolutions de courbures. Au moins une partie de la surface 42 est métallique, ladite partie accueillant la tôle 38. La première portion de moulage 40 peut permettre de réaliser une demi-coquille du carter externe.

Au moins une portion de la tôle 38 est plaquée contre au moins une portion de la surface 42 qui est métallique. La tôle est arquée selon au moins deux directions. Ses deux extrémités sont rapprochées, ses bords longitudinaux peuvent voir leurs longueurs varier. Préférentiellement, ces déformations restent majoritairement des déformations élastiques. La zone de contact entre la tôle et la surface 42 peut être une ligne de contact 44 s'étendant le long de la tôle, à distance de ses bords ; ou décrire le périmètre de la tôle. Eventuellement, la tôle 38 est plaquée selon toute sa surface contre la surface 42.

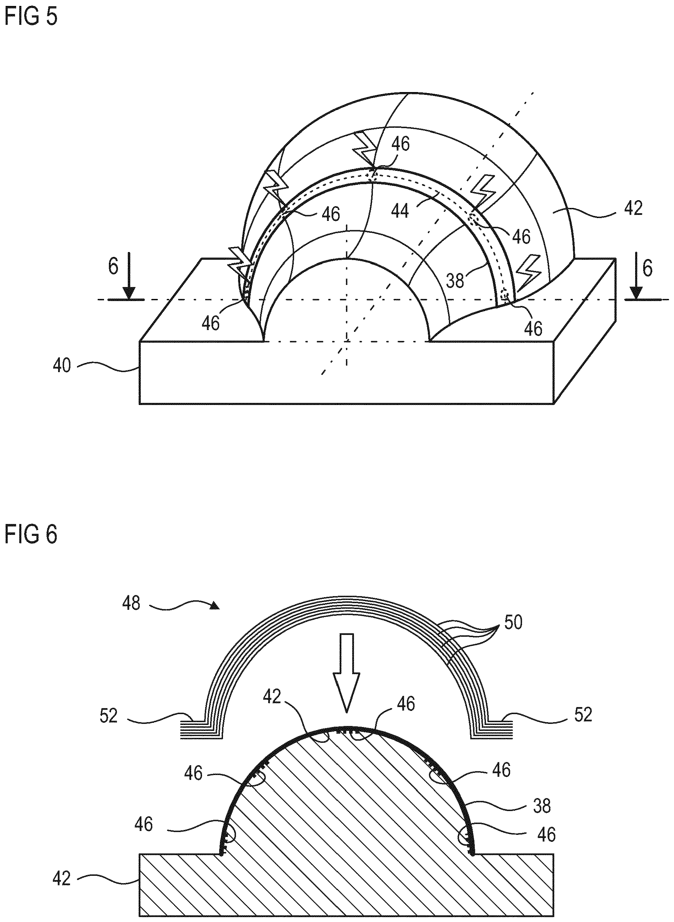

La figure 5 représente l'étape de (a+1) fixation 105 de la tôle sur la surface du moule. L'étape (a+1) peut être une étape intermédiaire de l'étape (a).

Afin d'être maintenue contre la surface 42 la tôle 38 y fixée, par exemple provisoirement, à l'aide de moyens de fixation 46 par soudure. Les moyens de fixation 46 peuvent comprendre en outre un ou plusieurs des moyens suivants :
microsoudure, soudure par résistance électrique ou soudure par points, brasure, collage, agrafage, vissage. Les moyens de fixation 46 peuvent être sur le moule et/ou sur la tôle 38.

Les moyens de fixation 46 sont réalisés au niveau de la zone de contact. Ils peuvent former au moins une zone de fixation, préférentiellement plusieurs zones de fixations distantes les unes des autres et éventuellement réparties sur la tôle. Chaque zone de fixation peut comprendre un ou plusieurs points de fixation, par exemple des points de soudure. Les moyens de fixation peuvent s'étendre le long d'une ou de plusieurs lignes. Les zones de fixation peuvent être réparties le long d'une ligne, par exemple le long de la ligne de contact 44. Les moyens de fixation peuvent former au moins trois zones de fixation réparties le long de la tôle: une zone centrale et deux zones latérales. La zone centrale peut comprendre deux points de fixation, par exemple des points de soudure, qui sont éventuellement distants axialement. Les zones latérales peuvent chacune comprendre trois points de fixation, par exemple des points de soudure, qui sont agencés en triangle. Les points de soudures sont ainsi répartis axialement pour contribuer à plaquer axialement la tôle lors de sa fixation. Les moyens de fixation 46 peuvent comprendre des points de soudures et/ou des zones de soudures. Les soudures 46 peuvent être effectuées par friction, par points. Les moyens de fixation peuvent présenter un diamètre inférieur à 2,00 mm, éventuellement inférieur à 0,10 mm.

Des soudures, en particulier des brasures, peuvent être réalisées avec un matériau d'apport, de même nature que la surface de moulage métallique et/ou de même nature que la tôle 38. Ou encore, le matériau d'apport, par exemple de l'étain, peut être différent et présenter éventuellement une température de fusion inférieure à 800°C, préférentiellement inférieure à 500°C. Pour réaliser les brasures, il est envisageable de disposer du métal d'apport contre la tôle 38 ou la surface 42 du moule, et de chauffer ce métal d'apport au travers de la tôle 38.

Bien qu'une seule tôle soit représentée, il est naturellement envisageable de plaquer et de souder plusieurs tôles sur la surface du moule. La surface peut être intégralement métallique, ou présenter plusieurs surfaces de moulage métalliques, éventuellement distantes axialement les unes des autres.

Les étapes (a) et (a+1) peuvent être effectuées simultanément, la tôle étant fixée à mesure qu'elle est mise en place.

La figure 6 est une coupe selon l'axe 6-6 tracé sur la figure 5. La figure 6 représente l'étape (b-3) mise en place d'une préforme fibreuse 48 contre la surface 42 du moule.

La préforme fibreuse 48 recouvre les soudures 46, et éventuellement toute la tôle 38. Elle peut recouvrir toute la surface 42. Elle peut être réalisée sur un support spécifique, ou être réalisée par empilement ou drapage de plis fibreux 50 sur la surface 42. La préforme 48 peut comprendre une combinaison de plis de différentes natures, par exemple avec une structure tissée ou non tissée ; avec des fibres de carbone ou des fibres de verre. Les fibres peuvent être pré-imprégnées.

La préforme 48 peut présenter des formes de brides axiales 52, de brides radiales (non représentées). Elle peut comprendre les inserts pour les orifices de fixation.

Il est à noter que l'étape (b-3) est optionnelle dans le procédé selon l'invention. En effet, la pièce composite peut être réalisée à l'aide d'une résine chargée en fibres. Ou encore, la pièce composite peut présenter un corps réalisé en résine polymère, par exemple essentiellement à l'aide d'une résine non chargée. Cette résine peut adhérer à la tôle et faire corps avec, le tout formant une construction composite.

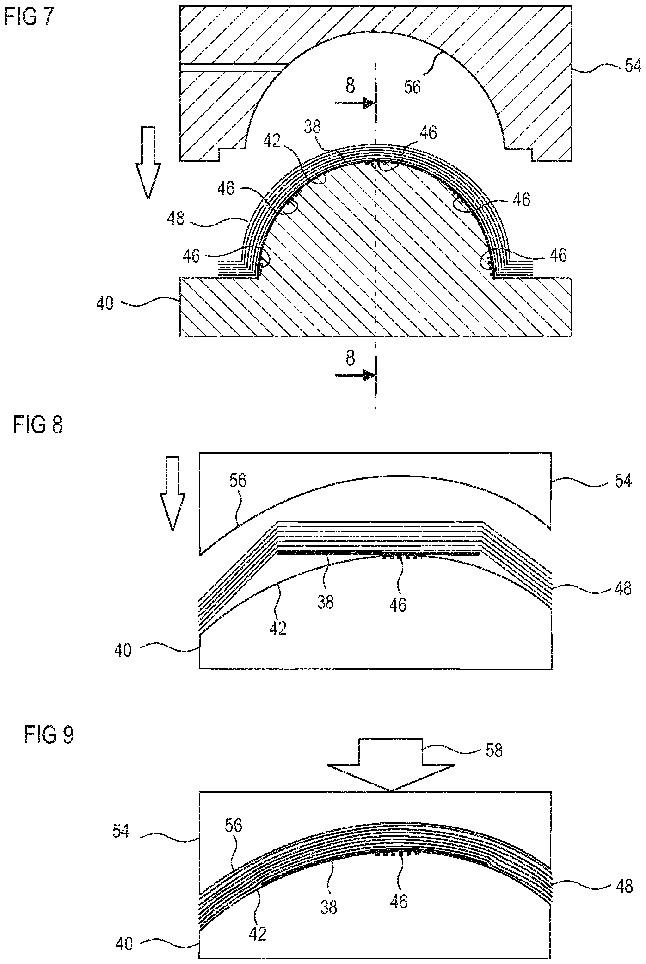

La figure 7 représente l'étape de (b-2) fermeture partielle du moule par-dessus la préforme 48.

Le moule peut comprendre une deuxième portion de moulage 54 ou contre moule 54. Les portions de moulage comprennent des surfaces de moulages, qui délimitent en combinaison une enceinte de moulage essentiellement close. Au moins une des surfaces de moulage est métallique, préférentiellement toutes les surfaces de moulage sont métalliques.

Le moule peut présenter des canaux d'injection, éventuellement des évents, par exemple munis de clapets. Le moule peut comprendre des moyens de chauffage pour atteindre une température souhaitée, par exemple pour polymériser une résine.

La préforme 48 est disposée sur la première portion de moulage, 40 ou moule inférieur 40. La deuxième portion de moulage 54, ou moule supérieur 54, est disposée au-dessus de la première portion de moulage 40. La deuxième portion de moulage 54 est ensuite rapprochée de la première portion de moulage 40 et de la préforme 48 jusqu'à venir au contact de cette dernière.

La surface 42 du moule est une première surface de moulage 42. La deuxième portion de moulage 54 comprend une deuxième surface de moulage 56 qui est généralement complémentaire à la surface extérieure du corps de la pièce composite. La deuxième surface de moulage 56 est généralement similaire à la première surface de moulage 42. La première surface de moulage 42 et la deuxième surface de moulage 56 délimitent un espace englobant la majorité, préférentiellement généralement la totalité de la pièce composite.

La figure 8 illustre une coupe suivant l'axe 8-8 tracé sur la figure 7, d'une portion du moule et d'une portion de la préforme 48.

Vu de profil, on remarque que la tôle 38 peut rester localement relevée par rapport à la première surface de moulage 42, par exemple en raison de sa raideur et/ou des courbures de la première surface de moulage 42. Eventuellement, les bords longitudinaux de la tôle 38 peuvent rester relevés suite à la soudure.

La préforme 48 qui est appliquée par-dessus la tôle 38 peut rester localement à distance de la première surface de moulage 42 et former des zones relevées. Lors de l'étape de fermeture du moule, la deuxième surface de moulage 56 entre en contact de la préforme 48, en particulier au niveau de ses zones relevées. La préforme 48 et la raideur de la tôle 38 peuvent s'opposer à la fermeture totale du moule, et éventuellement bloquer cette fermeture totale.

La figure 9 esquisse l'étape (b-1) application d'une pression sur la tôle 38 par la préforme 48, ou compression de la préforme lors de la fermeture complète du moule.

La fermeture totale du moule est forcée, par exemple à l'aide d'un effort supplémentaire 58 éventuellement appliqué sur la deuxième portion de moulage 54. Par ce biais, la première portion de moulage 40 vient en butée contre la deuxième portion de moulage 54. La préforme 48 qui pouvait présenter un foisonnement au préalable est alors partiellement compactée. L'épaisseur de ses plis et/ou les vides entre ses plis peuvent se réduire.

Les zones de la préforme qui étaient relevées à cause de la tôle 38 sont rabattues par la deuxième surface de moulage 56. A leur tour, lesdites zones de la préforme exercent un effort contre la tôle 38 et la plaquent contre la première surface de moulage 42. Toute la surface de la tôle 38 peut être généralement plaquée contre la première surface de moulage 42. La tôle 38 est à nouveau déformée, préférentiellement élastiquement. Lors de la fermeture du moule, la préforme peut être compactée, éventuellement au-delà des zones recouvrant la tôle.

Dans cette configuration, on remarque que la préforme 48 et les soudures 46 se complètent pour maintenir et plaquer la tôle 38. Ainsi, le maintien de la tôle est optimal pour répondre à ses exigences de positionnement.

Selon l'invention, les étapes (b-2) et (b-1) peuvent s'effectuer simultanément, éventuellement progressivement. Les étapes (b-3), (b-2) et (b-1) peuvent appartenir à l'étape (b) et en être des sous intermédiaires.

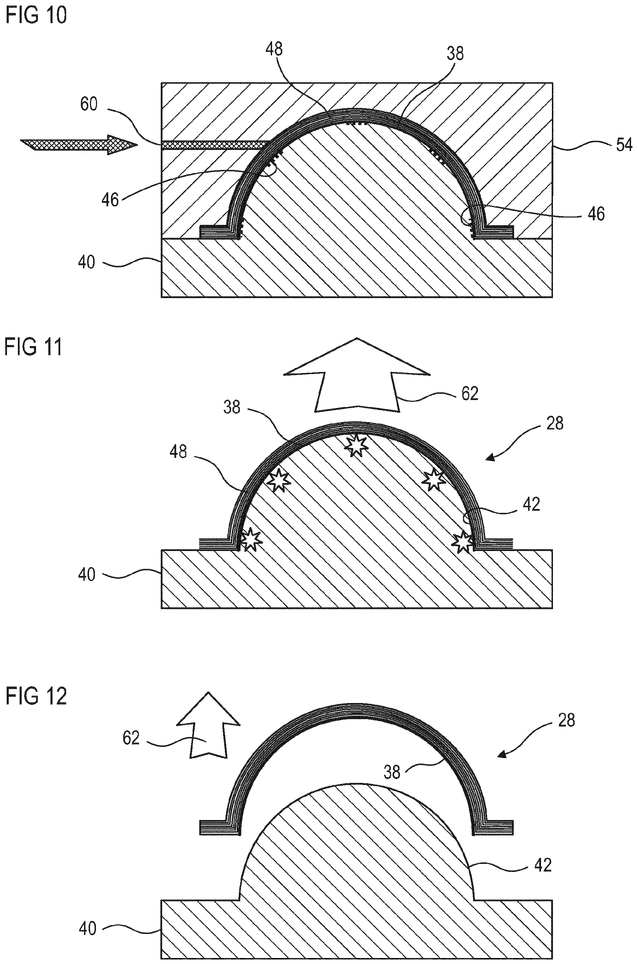

La figure 10 symbolise l'étape (b) injection et solidification de la résine dans le moule.

Le moule est fermé, la préforme 48 est compactée. Elle est densifiée par l'injection d'une résine 60 sous pression via un canal d'injection. La résine 60 s'infiltre dans l'ensemble de la préforme 48 et en comble les vides de sorte à former le corps. Une aspiration peut être appliquée pour favoriser la propagation de la résine. La température du moule peut être augmentée et maintenue pendant une durée souhaitée, par exemple pour améliorer l'imprégnation.

Suite à l'étape (b) injection ou imprégnation, la résine se solidifie. Elle peut polymériser ou réticuler. Elle peut adhérer à la tôle 38, de sorte à lier cette dernière au corps. La tôle peut recevoir un traitement pour augmenter sa cohésion avec la résine.

Selon l'invention, l'injection n'est pas un aspect indispensable de l'invention. En effet, la préforme peut être pré-imprégnée d'une résine qui se solidifie, par exemple par chauffage, et qui adhère à la tôle. Après solidification de la résine de pré-imprégnation, la tôle et la préforme peuvent former un solide mécanique.

Après solidification, la pièce composite peut être démoulée lors d'une étape (c). L'étape de démoulage peut s'effectuer en plusieurs temps.

La figure 11 représente une première étape intermédiaire (c1) de l'étape de démoulage (c). La première étape peut être une étape de libération de la tôle par les moyens de fixation. Au préalable, la deuxième portion de moulage a été retirée.

Après solidification de la résine, la pièce composite 28 est essentiellement formée. Pour l'extraire de la première portion de moulage 40, un effort de démoulage 62 lui est appliqué, par exemple selon une direction de démoulage. La direction de démoulage peut être la direction principale d'ouverture du moule, et/ou une perpendiculaire au plan principal de la tôle, et/ou une parallèle à l'axe de révolution de la tôle. Cet effort peut être exercé sur le corps, ou sur les brides. L'effort de démoulage 62 peut être une traction manuelle, et/ou une poussée mécanique à l'aide d'un dispositif de démoulage. Le dispositif de démoulage peut comporter des pistons disposés sur la première portion de moulage et qui sont aptes à faire saillie par rapport à la première surface de moulage, et à se rétracter. Le dispositif de démoulage peut exercer un effort de démoulage 62 contre la tôle 38, ou éventuellement à distance de la tôle.

Les moyens de fixation sont configurés pour libérer la tôle sous l'effet de l'effort de démoulage 62. Les moyens de démoulage peuvent être configurés pour libérer la tôle lorsque l'effort de démoulage est compris entre 10 N/m2 et 100000 N/m2 de tôle 38, préférentiellement compris entre 500 N/m2 et 5000 N/m2, et qu'il est dirigé selon une direction de démoulage. Une direction de démoulage peut être le plan général de jonction entre la première portion de moulage et la deuxième portion de moulage.

Les moyens de fixation telles les soudures, les microsoudures, les brasages peuvent être configurés pour rompre pendant l'étape (c1). Les moyens de fixation peuvent être configurés pour se déformer et libérer la tôle lors de l'étape (c1). Une partie des moyens de fixation, tels des résidus de soudure, peuvent rester sur la surface du moule après avoir libéré la tôle. Cette partie des moyens de fixation peut éventuellement modifier la surface du moule, mais cette modification reste acceptable puisque la surface concernée sera à nouveau recouverte par une autre tôle lors d'un moulage ultérieur. Le moule est adapté pour pouvoir effectuer une série de plus de 100 pièces, préférentiellement plus de 1000 pièces, éventuellement sans nécessiter de rectifier la surface recevant la tôle.

Les moyens de fixation peuvent être essentiellement fragiles. Chaque zone de fixation peut rompre sous un effort inférieur à 500 N, éventuellement inférieur à 1 N, et/ou présenter une résilience inférieure à 2000 J, éventuellement inférieure à 1 J. Les moyens de fixation peuvent être sollicités en traction et/ou en cisaillement. Ainsi, un effort manuel sec peut permettre de casser les moyens de fixation et démouler le carter externe composite. Une impulsion mécanique, tel un coup de maillet peut suffire à libérer la pièce composite 28.

La figure 12 schématise l'étape (c2) extraction de la pièce composite 28 du moule, qui peut correspondre au deuxième temps de l'étape (c) démoulage.

Suite à la libération de la tôle par les moyens de fixation, la pièce composite 28 est essentiellement décollée de la première portion de moulage et peut en être extraite, par exemple grâce à l'effort de démoulage 62. Elle est emmenée à distance de la première portion de moulage 42. L'effort de démoulage 62 peut être modulé suivant les libérations des moyens de fixation.

Ensuite, la pièce composite peut comprendre une étape de dépôt d'une couche annulaire de matériau abradable sur la tôle. Elle peut également suivre une étape de montage d'aubes statoriques. Elle peut ultérieurement être montée dans une turbomachine.

Suivant une alternative de l'invention, l'étape (c1) libération de la tôle des moyens de fixation et l'étape i) extraction de la pièce composite peuvent s'effectuer simultanément, d'un coup ou progressivement.

## Revendications

1. Procédé de fabrication d'une pièce composite (28) comprenant un corps en résine et une tôle (38) formant une surface de ladite pièce, le procédé comprenant les étapes suivantes :
(a) mise en place (104) de la tôle (38) contre une surface (42) d'un moule;
(b) injection et solidification (110) de la résine (60) dans le moule de sorte à former le corps en le liant à la tôle (38) ;
(c) démoulage (111) de la pièce composite (28) ;
**caractérisé en ce que**
l'étape (a) comprend la fixation de la tôle (38) sur la surface (42) du moule avec des moyens de fixation (46) par soudure, les moyens de fixation (46) étant configurés pour maintenir la tôle durant l'étape (b), et pour libérer la tôle lors de l'étape (c) lorsqu'un effort de démoulage (62) est exercé sur la pièce composite (28).

2. Procédé de moulage selon la revendication 1, **caractérisé en ce que** les moyens de fixation (46) comprennent en outre un ou plusieurs des moyens suivants :
microsoudure, soudure par résistance électrique, brasure, collage, agrafage, vissage.

3. Procédé de moulage selon l'une des revendications 1 à 2, **caractérisé en ce que** les moyens de fixation (46) sont configurés pour libérer la tôle (38), préférentiellement par rupture desdits moyens, lorsqu'un effort compris entre 100 N et 10000 N par m² de tôle est appliqué à la tôle (38) dans la direction de démoulage.

4. Procédé de moulage selon l'une des revendications 1 à 3, **caractérisé en ce que** les moyens de fixation (46) sont configurés de sorte à ce que la fixation de la tôle (38) à la surface (42) du moule est moins forte qu'avec le corps après solidification de la résine.

5. Procédé de moulage selon l'une des revendications 1 à 4, **caractérisé en ce que** la tôle (38) de l'étape (a) (101) est initialement généralement plane et flexible et est cintrée sur la surface (42) du moule incurvée et/ou bombée.

6. Procédé de moulage selon l'une des revendications 1 à 5, **caractérisé en ce qu'**avant l'étape (b) (110), le procédé comprend une étape (b-3) préalable à l'étape (b), de mise en place (106) d'une préforme fibreuse (48) dans le moule qui recouvre la tôle (38), préférentiellement la préforme (48) s'étend dans la majorité du volume du corps de la pièce composite (28).

7. Procédé de moulage selon la revendication 6, **caractérisé en ce que** le procédé comprend une étape (b-1) entre l'étape (b-3) et l'étape (b), durant laquelle la préforme (48) presse la tôle (38) contre la surface (42) du moule, éventuellement la préforme (48) déforme la tôle (38) et la plaque d'avantage contre la surface (42) du moule.

8. Procédé de moulage selon l'une des revendications 6 à 7, **caractérisé en ce que** la préforme fibreuse (48) comprend un empilement de plis fibreux (50), préférentiellement les plis sont tissés (50).

9. Procédé de moulage selon l'une des revendications 6 à 8, **caractérisé en ce que** la préforme fibreuse (48) comprend des fibres de carbone et/ou des fibres de verre, préférentiellement la préforme (48) est pré imprégnée d'une résine.

10. Procédé de moulage selon l'une des revendications 1 à 9, **caractérisé en ce que** la tôle (38) comprend une forme de bande avec un axe d'allongement principal, les moyens de fixation (46) étant répartis parallèlement à l'allongement principal.

11. Procédé de moulage selon l'une des revendications 1 à 10, **caractérisé en ce que** chacun des moyens de fixation (46) comprend un diamètre général compris entre 0,001 mm et 20,00 mm, préférentiellement compris entre 0,005 mm et à 2,00 mm, plus préférentiellement compris entre 0,010 mm et 0,05 mm.

12. Procédé de moulage selon l'une des revendications 1 à 11, **caractérisé en ce que** la pièce composite (28) est un carter annulaire externe, notamment de compresseur axial (4 ; 7), avec une surface annulaire interne, la tôle (38) étant une tôle annulaire plaquée contre la surface annulaire interne.

13. Procédé de moulage selon la revendication 12, **caractérisé en ce que** la surface annulaire interne présente une variation de rayon, la tôle (38) comprend une pluralité de perforations ou de découpes réparties sur sa surface de sorte à augmenter sa capacité à épouser la surface interne.

14. Procédé de moulage selon l'une des revendications 12 et 13, **caractérisé en ce que** le carter annulaire est réalisé par demi-carters annulaires séparés par un plan s'étendant axialement, éventuellement ledit plan sépare également la tôle (38), préférentiellement les demi-carters comprennent des brides annulaires (30) et des brides axiales qui s'étendent radialement.

15. Procédé de moulage selon l'une des revendications 12 à 14, **caractérisé en ce que** la tôle (38) est recouverte d'une couche de matériau abradable (36) destinée à coopérer par abrasion avec des extrémités d'aubes rotoriques (24) de sorte à assurer une étanchéité.

## Patentansprüche

1. Verfahren für die Herstellung eines Verbundteils (28), das einen Korpus aus Harz und ein Blech (38) beinhaltet, welches eine Oberfläche des genannten Teils bildet, wobei das Verfahren die folgenden Schritte beinhaltet:
(a) Ansetzen (104) des Blechs (38) gegen eine Oberfläche (42) einer Form;
(b) Einspritzen und Verfestigen (110) des Harzes (60) in der Form, um den Korpus zu bilden, indem er mit dem Blech (38) verbunden wird;
(c) Entformen (111) des Verbundteils (28);
**dadurch gekennzeichnet, dass**
der Schritt (a) die Befestigung des Bleches (38) auf der Oberfläche (42) der Form anhand von Befestigungsmitteln (46) durch Schweißen beinhaltet, wobei die Befestigungsmittel (46) konfiguriert sind, um das Blech während des Schritts (b) zu halten und um das Blech anlässlich des Schritts (c) freizugeben, wenn eine Entformungskraft auf das Verbundteil (28) ausgeübt wird.

2. Gießverfahren nach Patentanspruch 1, **dadurch gekennzeichnet, dass** die Befestigungsmittel (46) außerdem eines oder mehrere der folgenden Mittel beinhalten:
Mikroschweißen, Widerstandsschweißen, Löten, Kleben, Anklammern, Anschrauben.

3. Gießverfahren nach einem der Patentansprüche 1 bis 2, **dadurch gekennzeichnet, dass** die Befestigungsmittel (46) konfiguriert sind, um das Blech (38) freizugeben, vorzugsweise durch Bruch der genannten Mittel, wenn eine Kraft zwischen 100 N und 10000 N pro m² Blech in Entformungsrichtung auf das Blech (38) ausgeübt wird.

4. Gießverfahren nach einem der Patentansprüche 1 bis 3, **dadurch gekennzeichnet, dass** die Befestigungsmittel (46) so konfiguriert sind, dass die Befestigung des Blechs (38) auf der Oberfläche (42) der Form weniger stark ist, als mit dem Korpus nach dem Verfestigen des Harzes.

5. Gießverfahren nach einem der Patentansprüche 1 bis 4, **dadurch gekennzeichnet, dass** das Blech (38) von Schritt (a) (101) anfänglich allgemein plan und flexibel ist und auf der Oberfläche (42) der gebogenen und/oder gewölbten Form gebogen wird.

6. Gießverfahren nach einem der Patentansprüche 1 bis 5, **dadurch gekennzeichnet, dass** vor dem Schritt (b) (110) das Verfahren einen Schritt (b-3) beinhaltet, der dem Schritt (b) vorausgeht, bei dem eine faserige Vorform (46) in die Form eingesetzt wird (106), welche das Blech (38) abdeckt, wobei sich die Vorform (48) vorzugsweise über den größten Teil des Volumens des Korpus des Verbundteils (28) erstreckt.

7. Gießverfahren nach Patentanspruch 6, **dadurch gekennzeichnet, dass** das Verfahren einen Schritt (b-1) zwischen dem Schritt (b-3) und dem Schritt (b) beinhaltet, in dessen Verlauf die Vorform (48) das Blech (38) gegen die Oberfläche (42) der Form drückt, wobei die Vorform (48) eventuell das Blech (38) verformt und es stärker gegen die Oberfläche (42) der Form drückt.

8. Gießverfahren nach einem der Patentansprüche 6 bis 7, **dadurch gekennzeichnet, dass** die faserige Vorform (48) eine Aufschichtung von faserigen Lagen (50) beinhaltet, wobei die Lagen vorzugsweise gewebt sind (50).

9. Gießverfahren nach einem der Patentansprüche 6 bis 8, **dadurch gekennzeichnet, dass** die faserige Vorform (48) Kohlefasern und/oder Glasfasern beinhaltet und die Vorform (48) vorzugsweise mit einem Harz vorgetränkt ist.

10. Gießverfahren nach einem der Patentansprüche 1 bis 9, **dadurch gekennzeichnet, dass** das Blech (38) eine Bandform mit einer Hauptverlängerungsachse beinhaltet, wobei die Befestigungsmittel (46) parallel zur Hauptverlängerung verteilt sind.

11. Gießverfahren nach einem der Patentansprüche 1 bis 10, **dadurch gekennzeichnet, dass** jedes der Befestigungsmittel (46) einen allgemeinen Durchmesser zwischen 0,001 mm und 20,00 mm, vorzugsweise zwischen 0,005 mm und 2,00 mm, noch bevorzugter zwischen 0,010 mm und 0,05 mm aufweist.

12. Gießverfahren nach einem der Patentansprüche 1 bis 11, **dadurch gekennzeichnet, dass** das Verbundteil (28) ein ringförmiges äußeres Gehäuse und insbesondere eines axialen Kompressors (4; 7) ist, mit einer ringförmigen inneren Fläche, wobei das Blech (38) ein ringförmiges Blech ist, das an die ringförmige innere Fläche angedrückt ist.

13. Gießverfahren nach Patentanspruch 12, **dadurch gekennzeichnet, dass** die ringförmige innere Fläche einen veränderlichen Radius aufweist und das Blech (38) eine Mehrzahl von Perforationen oder Ausschnitten aufweist, die auf seiner Oberfläche verteilt sind, um seine Fähigkeit zu steigern, sich der inneren Oberfläche anzuschmiegen.

14. Gießverfahren nach einem der Patentansprüche 12 und 13, **dadurch gekennzeichnet, dass** das ringförmige Gehäuse anhand von ringförmigen Halbgehäusen ausgeführt ist, die anhand einer Ebene getrennt sind, die sich axial erstreckt, wobei die genannte Ebene gegebenenfalls auch das Blech (38) trennt und die Halbgehäuse vorzugsweise ringförmige Flansche (38) und axiale Flansche beinhalten, die sich radial erstrecken.

15. Gießverfahren nach einem der Patentansprüche 12 bis 14, **dadurch gekennzeichnet, dass** das Blech (38) mit einer Schicht eines Abriebmaterials (36) bedeckt ist, die dazu bestimmt ist, um mittels Abrieb mit den Enden von Rotorschaufeln zusammenzuwirken, um eine Dichtigkeit zu gewährleisten.

## Claims

1. Method of manufacturing a composite part (28) comprising a resin body and a metal sheet (38) forming a surface of said part, the method comprising the following steps:
(a) placement (104) of the metal sheet (38) against a surface (42) of a mold;
(b) injection and solidification (110) of the resin (60) in the mold so as to form the body by binding it to the metal sheet (38);
(c) removing (111) the composite part (28);
**characterized in that**
step (a) comprises fastening the metal sheet (38) on the surface (42) of the mold with fastening means (46) configured to hold the metal sheet during step (b), and for releasing the metal sheet at step (c) when a release force (62) is exerted on the composite part (28).

2. Molding method according to claim 1, **characterized in that** the fastening means (46) further comprise one or more of the following: welding, microwelding, electrical resistance welding, brazing, gluing, stapling, screwing.

3. Molding method according to one of claims 1 to 2, **characterized in that** the fastening means (46) are configured to release the metal sheet (38), preferably by breaking said means, when a force comprised between 100 N 10 000 N per m² sheet is applied to the metal sheet (38) in the releasing direction.

4. Molding method according to one of claims 1 to 3, **characterized in that** the fastening means (46) are configured such that the fastening of the metal sheet (38) to the surface (42) of the mold is weaker than with the body after solidification of the resin.

5. Molding method according to one of claims 1 to 4 (38), **characterized in that** the metal sheet (38) of step (a) (101) is initially generally flat and flexible and is bent on the surface (42) of the incurved or cambered mold.

6. Molding method according to one of claims 1 to 5, **characterized in that** before step (b) (110), the method comprises a step (b-3) prior to step (b), of placing (106) a fibrous preform (48) into the mold overlying the metal sheet (38), preferably the preform (48) extends in the majority of the volume of body of the composite part (28).

7. Method of molding according to claim 6, **characterized in that** the method comprises a step (b-1) between the step (b-3) and step (b), during which the preform (48) presses the metal sheet (38) against the surface (42) of the mold, optionally the preform (48) deforming the metal sheet (38) and applying it to a greater extent against the mold surface (42).

8. Molding method according to one of claims 6-7, **characterized in that** the fibrous preform (48) comprises a stack of fiber plies (50), the plies being preferably woven (50).

9. Molding method according to one of claims 6 to 8, **characterized in that** the fiber preform (48) comprises carbon fibers and/or glass fibers, preferably the preform (48) is pre-impregnated by a resin.

10. Molding method according to one of claims 1 to 9, **characterized in that** the metal sheet (38) comprises a strip shape with a main extension axis, the fastening means (46) being located parallel to the main elongation.

11. Molding method according to one of claims 1 to 10, **characterized in that** each fastening means (46) comprises an general diameter comprised between 0,001 mm and 20,00 mm, preferably between 0,005 and 2 mm, 00 mm, more preferably between 0.010 mm and 0.05 mm.

12. Method according to one of claims 1 to 11, **characterized in that** the composite part (28) is an annular outer casing, among others of an axial compressor (4; 7), with an internal annular surface, the metal sheet (38) being an annular metal sheet pressed against the internal annular surface.

13. Molding method according to claim 12, **characterized in that** the inner annular surface has a varying radius, the metal sheet (38) comprising a plurality of perforations or cut-outs distributed over its surface so as to increase its ability to conform to the internal surface.

14. Molding method according to one of claims 12 and 13, **characterized in that** the annular casing is formed by annular casing halves separated by an axially extending plane, said plane optionally also separating the metal sheet (38), preferably the casing halves comprise annular flanges (30) and axial flanges extending radially.

15. Molding method according to one of Claims 12 to 14, **characterized in that** the metal sheet (38) is covered with a layer of abradable material (36) intended to cooperate with the ends by abrasion of rotor blades (24 ) so as to provide a seal.
